# EUROPEAN PATENT APPLICATION

(11) **EP 4 071 671 A1**
(43) Date of publication of application: **12.10.2022**
(21) Application number: 20895904.9
(22) Date of filing: 11.11.2020
(51) Int. Cl.: G06N 3/08, G06N 20/00

(54) **INFORMATION PROCESSING METHOD, INFORMATION PROCESSING SYSTEM, AND INFORMATION PROCESSING DEVICE**

(30) Priority: 06.12.2019 US 201962944664 P; 08.06.2020 JP 2020099410
(71) Applicant: Panasonic Intellectual Property Corporation of America, Torrance, CA 90504 (US)
(72) Inventor: ISHII, Yasunori, Chuo-ku, Osaka-shi, Osaka 540-6207 (JP); NAKATA, Yohei, Chuo-ku, Osaka-shi, Osaka 540-6207 (JP); OKUNO, Tomoyuki, Chuo-ku, Osaka-shi, Osaka 540-6207 (JP)
(74) Representative: Novagraaf International SA
(86) International application number: PCT/JP2020/042078
(87) International publication number: WO 2021/111831

(57) **Abstract**

An information processing includes: obtaining first data belonging to a first type and second data belonging to a second type different from the first type (S11); calculating a first prediction result by inputting the first data into a first prediction model (S12); calculating a second prediction result by inputting the first data into the second prediction model (S13); calculating a third prediction result by inputting the second data into the second prediction model (S14); calculating a first error between the first prediction result and the second prediction result (S15); calculating a second error between the second prediction result and the third prediction result (S16); and training the second prediction model by machine learning, based on the first error and the second error (S17).

## Description

### [Technical Field]

The present disclosure relates to an information processing method, an information processing system, and an information processing device for training a prediction model by machine learning.

### [Background Art]

In recent years, conversion of a prediction model into a lighter prediction model is being carried out in order to make processing lighter during execution of deep learning on an edge device. For example, Patent Literature (PTL) 1 discloses a technique of converting a prediction model while keeping prediction performance as is before and after prediction model conversion. In PTL 1, conversion of a prediction model (for example, conversion from a first prediction model to a second prediction model) is carried out in such a way that prediction performance does not drop.

### [Citation List]

### [Patent Literature]

[PTL 1] United States Unexamined Patent Application Publication No. 2016/0328644

### [Summary of Invention]

### [Technical Problem]

However, in the technique disclosed in above-described PTL 1, even if the prediction performance (for example, recognizing performance such as recognition rate) is the same between the first prediction model and the second prediction model, there are cases where the behavior (for example, correct answer/incorrect answer) of the first prediction model and the behavior of the second prediction model are different for a certain prediction target. Specifically, between the first prediction model and the second prediction model, there are cases where, even when statistical prediction results are the same, individual prediction results are different.

In view of this, the present disclosure provides an information processing method, and the like, that can bring the behavior of a first prediction model and the behavior of a second prediction model closer together.

### [Solution to Problem]

An information processing method according to the present disclosure is a method to be executed by a computer, and includes: obtaining first data belonging to a first type and second data belonging to a second type different from the first type; calculating a first prediction result by inputting the first data into a first prediction model; calculating a second prediction result by inputting the first data into the second prediction model; calculating a third prediction result by inputting the second data into the second prediction model; calculating a first error between the first prediction result and the second prediction result; calculating a second error between the second prediction result and the third prediction result; and training the second prediction model by machine learning, based on the first error and the second error.

It should be noted that these generic or specific aspects may be implemented as a system, a method, an integrated circuit, a computer program, or a computer-readable recording medium such as a CD-ROM, or may be implemented as any combination of a system, a method, an integrated circuit, a computer program, and a recording medium.

### [Advantageous Effects of Invention]

An information processing method, and the like, according to an aspect of the present disclosure can bring the behavior of a first prediction model and the behavior of a second prediction model closer together.

### [Brief Description of Drawings]

[FIG. 1]

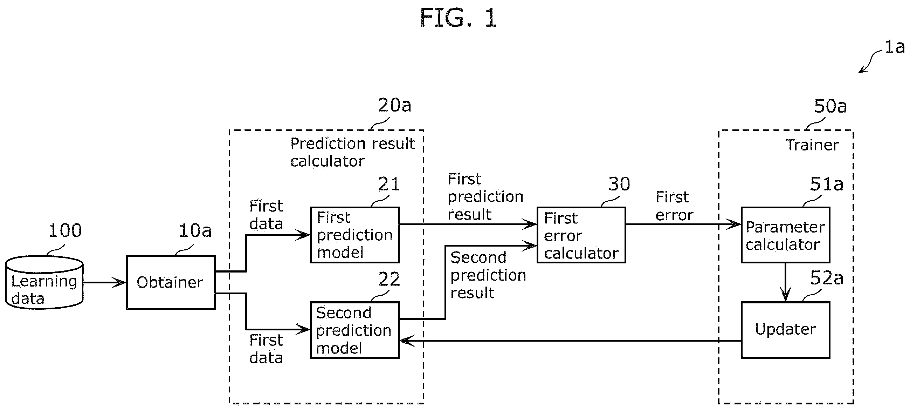

   FIG. 1 is a block diagram illustrating an example of an information processing system according to a comparative example.
[FIG. 2]

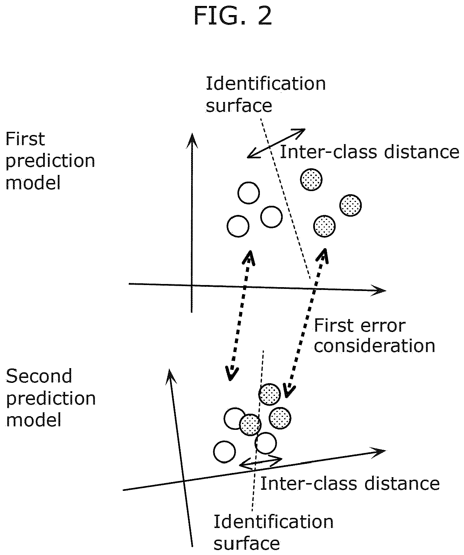

   FIG. 2 is a diagram illustrating an example of a feature value space immediately before an identification layer in a first prediction model and a feature value space immediately before an identification layer in a second prediction model in the comparative example.
[FIG. 3]

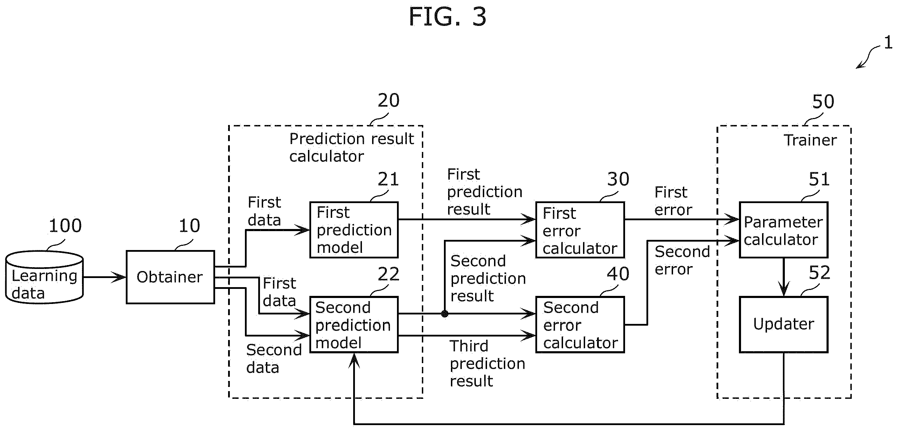

   FIG. 3 is a block diagram illustrating an example of an information processing system according to an embodiment.
[FIG. 4]

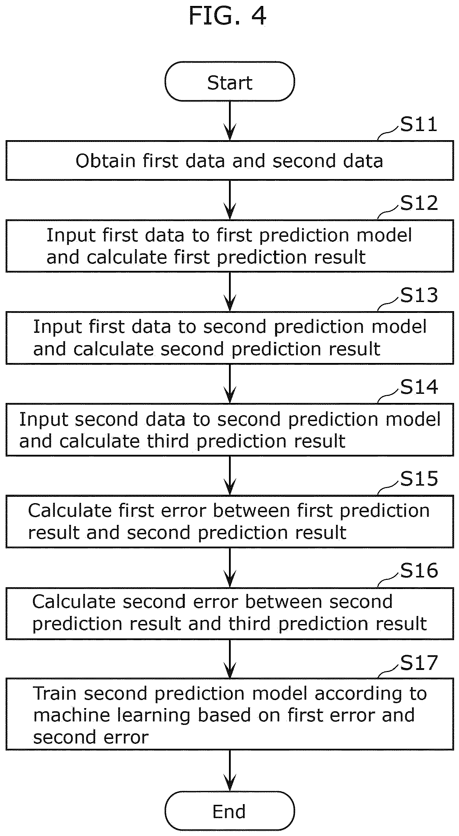

   FIG. 4 is a flowchart illustrating an example of an information processing method according to the embodiment.
[FIG. 5]

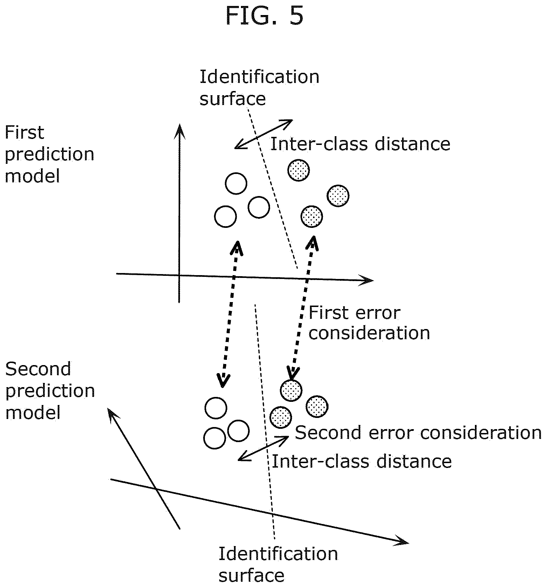

   FIG. 5 is a diagram illustrating an example of a feature value space immediately before an identification layer in a first prediction model and a feature value space immediately before an identification layer in a second prediction model in the embodiment.
[FIG. 6]

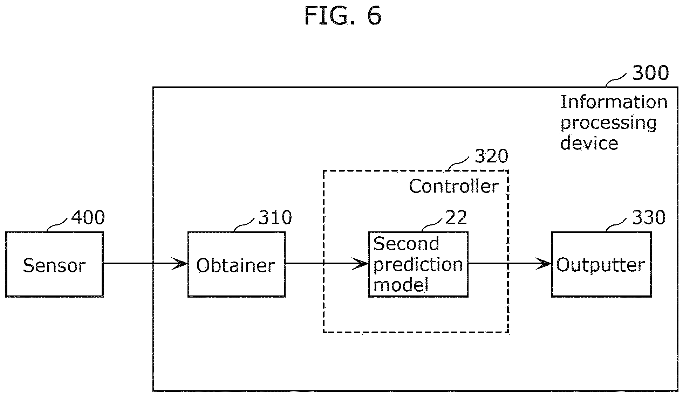

   FIG. 6 is a block diagram illustrating an example of an information processing device according to another embodiment.

### [Description of Embodiments]

In the related art, the conversion of the prediction model is carried out in such a way that prediction performance is not deteriorated. However, even if the prediction performance is the same between the first prediction model and the second prediction model, about a certain prediction target, there are cases where the behavior in the first prediction model and the behavior in the second prediction model are different. Here, behavior is an output of a prediction model with respect to each of a plurality of inputs. Specifically, even if statistical prediction results are the same in the first prediction model and the second prediction model, there are cases where individual prediction results are different. There is a risk that this difference causes a problem. For example, about a certain prediction target, there are cases where a prediction result is a correct answer in the first prediction model and a prediction result is an incorrect answer in the second prediction model and there are cases where a prediction result is an incorrect answer in the first prediction model and a prediction result is a correct answer in the second prediction model.

In this manner, if the behaviors are different between the first prediction model and the second prediction model, for example, even when the prediction performance of the first prediction model is improved and the second prediction model is generated from the first prediction model after the improvement, in some case, the prediction performance of the second prediction model is not improved or is deteriorated. For example, in the following processing in which a prediction result of a prediction model is used, there is also a risk that different processing results are output in the first prediction model and the second prediction model with respect to the same input. In particular, when the processing is processing relating to safety (for example, object recognition processing in a vehicle), there is a risk that the difference between the behaviors causes danger.

In response to this, an information processing method according to an aspect of the present disclosure is a method to be executed by a computer, and includes: obtaining first data belonging to a first type and second data belonging to a second type different from the first type; calculating a first prediction result by inputting the first data into a first prediction model; calculating a second prediction result by inputting the first data into the second prediction model; calculating a third prediction result by inputting the second data into the second prediction model; calculating a first error between the first prediction result and the second prediction result; calculating a second error between the second prediction result and the third prediction result; and training the second prediction model by machine learning, based on the first error and the second error.

According to the above, the second prediction model is trained by the machine learning using not only the first error between the first prediction result and the second prediction result calculated by inputting the same first data to the first prediction model and the second prediction model but also the second error between the second prediction result and the third prediction result calculated by inputting the first data and the second data of the different types to the second prediction model. Accordingly, it is possible to bring the behavior of the first prediction model and the behavior of the second prediction model close to each other. At the same time, it is possible to maintain or reduce a difference between recognition performance of the first prediction model and recognition performance of the second prediction model and prevent the difference from increasing.

Furthermore, the first type and the second type may be classes.

In this manner, the types may be the classes to which the data belong.

Furthermore, the first prediction model may have a configuration different from a configuration of the second prediction model.

Accordingly, the respective behaviors of the first prediction model and the second prediction model which have mutually different configurations (for example, network configurations) can be brought closer together.

Furthermore, the first prediction model may have a processing accuracy different from a processing accuracy of the second prediction model.

Accordingly, the respective behaviors of the first prediction model and the second prediction model which have mutually different processing accuracies (for example, bit precisions) can be brought closer together.

Furthermore, the second prediction model may be obtained by making the first prediction model lighter.

Accordingly, the behavior of the first prediction model and the behavior of the second prediction model which has been made lighter can be brought closer together.

Furthermore, the training may include: calculating a training parameter by which the first error decreases and the second error increases; and updating the second prediction model using the training parameter calculated.

According to the above, it is possible to improve a coincidence ratio of the behavior of the first prediction model and the behavior of the second prediction model by updating the second prediction model using the calculated training parameters so that the first prediction result and the second prediction result calculated by inputting the same first data to the first prediction model and the second prediction model different from each other coincide (that is, the first error decreases) and so that the second prediction result and the third prediction result calculated by inputting the first data and the second data of the different types to the same second prediction model do not coincide (that is, the second error increases).

Furthermore, the first prediction model and the second prediction model may be neural network models.

Accordingly, the respective behaviors of the first prediction model and the second prediction model which are neural network models can be brought closer together.

An information processing system according to an aspect of the present disclosure includes: an obtainer that obtains first data belonging to a first type and second data belonging to a second type different from the first type; a prediction result calculator that calculates a first prediction result by inputting the first data into a first prediction model, calculates a second prediction result by inputting the first data into the second prediction model, and calculates a third prediction result by inputting the second data into the second prediction model; a first error calculator that calculates a first error between the first prediction result and the second prediction result; a second error calculator that calculates a second error between the second prediction result and the third prediction result; and a trainer that trains the second prediction model by machine learning, based on the first error and the second error.

Accordingly, it is possible to provide an information processing system that can bring the behavior of the first prediction model and the behavior of the second prediction model closer together.

An information processing device according to an aspect of the present disclosure includes: an obtainer that obtains sensing data; a controller that obtains a prediction result by inputting the sensing data into a second prediction model; and an outputter that outputs data based on the prediction result obtained, wherein the second prediction model is trained by machine learning based on a first error and a second error, the first error is an error between a first prediction result and a second prediction result, the second error is an error between the second prediction result and a third prediction result, the first prediction result is calculated by inputting first data into a first prediction model, the second prediction result is calculated by inputting the first data into the second prediction model, the third prediction result is calculated by inputting second data into the second prediction model, the first data is data belonging to a first type, and the second data is data belonging to a second type different from the first type.

Accordingly, the second prediction model whose behavior has been brought closer to the behavior of the first prediction model can be used in a device. With this, it is possible to improve the performance of prediction processing using a prediction model in an embedded environment.

Hereinafter, embodiments will be described in detail with reference to the Drawings.

It should be noted that each of the following embodiments shows a generic or specific example. The numerical values, shapes, materials, structural components, the arrangement and connection of the structural components, steps, the processing order of the steps, etc. shown in the following embodiments are mere examples, and thus are not intended to limit the present disclosure.

### [Embodiment]

An information processing system according to an embodiment is explained below. Before the explanation, an information processing system according to a comparative example is explained with reference to FIG. 1 and FIG. 2.

FIG. 1 is a block diagram illustrating an example of information processing system 1a according to the comparative example. Information processing system 1a includes obtainer 10a, prediction result calculator 20a, first prediction model 21, second prediction model 22, first error calculator 30, trainer 50a, and learning data 100.

Information processing system 1a is a system for training second prediction model 22 with machine learning and uses learning data 100 in the machine learning. For example, second prediction model 22 is a model obtained by lightening first prediction model 21. For example, first prediction model 21 is a floating point model and second prediction model 22 is a fixed point model. Information processing system 1a trains second prediction model 22 with the machine learning so that even lightened second prediction model 22 has the same degree of recognition performance as the recognition performance of first prediction model 21.

Many types of data are included in learning data 100. For example, when a prediction model caused to recognize an image is trained by the machine learning, image data is included in learning data 100. Note that an image may be a captured image or may be a generated image.

Obtainer 10a obtains first data belonging to a first type. The first type is, for example, a class.

Prediction result calculator 20a inputs the first data to first prediction model 21 and calculates a first prediction result. Prediction result calculator 20a inputs the first data to second prediction model 22 and calculates a second prediction result. Specifically, prediction result calculator 20a inputs the same first data to first prediction model 21 and second prediction model 22 to calculate the first prediction result and the second prediction result.

First error calculator 30 calculates a first error between the first prediction result and the second prediction result. The first error is an error between the first prediction result and the second prediction result calculated when the same first data is input to first prediction model 21 and second prediction model 22 different from each other.

Trainer 50a trains second prediction model 22 with the machine learning based on the first error. Trainer 50a includes parameter calculator 51a and updater 52a. Parameter calculator 51a calculates training parameters so that the first error decreases. Updater 52a updates second prediction model 22 using the calculated training parameters. The first error decreasing means that the first prediction result and the second prediction result obtained when the first data of the same type is input to first prediction model 21 and second prediction model 22 different from each other are prediction results close to each other. When the first error is small, the first prediction result and the second prediction result are respectively similar recognition results, for example, when the same image is input to first prediction model 21 and second prediction model 22.

Here, a feature value space in first prediction model 21 and a feature value space in second prediction model 22 in the comparative example are explained with reference to FIG. 2.

FIG. 2 is a diagram illustrating an example of a feature value space immediately before an identification layer in first prediction model 21 and a feature value space immediately before an identification layer in second prediction model 22 in the comparative example. Six circles illustrated in each of the feature value spaces indicate feature values of data input to each of the prediction models. Three white circles are respectively feature values of data of the same type (for example, class X). Three dotted circles are respectively feature values of data of the same type (for example, class Y). Class X and class Y are different classes. For example, about each of the prediction models, a prediction result of data, feature values of which are present further on the left side than an identification surface in the feature value space, indicates class X and a prediction result of data, feature values of which are present further on the right side than the identification surface, indicates class Y.

First prediction model 21 is, for example, a floating point model and is a model having high expressive power (in other words, large number of parameters). Accordingly, in the feature value space in first prediction model 21, an inter-class distance is large about the data of class X and the data of class Y. Three data of class X and three data of class Y can be respectively identified.

On the other hand, second prediction model 22 is, for example, a lightened fixed point model and is a model having low expressive power (in other words, small number of parameters). Even if second prediction model 22 is trained considering the first error between the first prediction result and the second prediction result obtained when data of the same class X and data of the same class Y or the like are input to first prediction model 21 and second prediction model 22, an inter-class distance in second prediction model 22 does not increase. There is a limit in a change of a recognition class. For example, in training considering the first error, identification performance of first prediction model 21 and identification performance of second prediction model 22 can be set the same. Specifically in the example illustrated in FIG. 2, in second prediction model 22, as in first prediction model 21, among six data, three data can be identified as class X and three data can be identified as class Y. However, in the training considering the first error, it is difficult to bring the behavior of first prediction model 21 and the behavior of second prediction model 22 close to each other. Specifically, in the example illustrated in FIG. 2, data of the same class is identified as class X in first prediction model 21 but is identified as class Y in second prediction model 22 and data of another same class is identified as class Y in first prediction model 21 but is identified as class X in second prediction model 22.

In this way, in the training of second prediction model 22 based on the first error in the comparative example, the inter-class distance does not increase and it is difficult to bring the behavior of second prediction model 22 close to the behavior of first prediction model 21.

In contrast, in the information processing system according to the embodiment, second prediction model 22 can be trained by the machine learning so that the behavior of first prediction model 21 and the behavior of second prediction model 22 come close to each other. This is explained below.

FIG. 3 is a block diagram illustrating an example of information processing system 1 according to the embodiment. Information processing system 1 includes obtainer 10, prediction result calculator 20, first prediction model 21, second prediction model 22, first error calculator 30, second error calculator 40, trainer 50, and learning data 100.

Information processing system 1 is a system for training second prediction model 22 with machine learning and uses learning data 100 in the machine learning. Information processing system 1 is a computer including a processor and a memory. The memory is a ROM (Read Only Memory), a RAM (Random Access Memory), and the like and can store programs to be executed by the processor. Obtainer 10, prediction result calculator 20, first error calculator 30, second error calculator 40, and trainer 50 are realized by the processor or the like that executes the programs stored in the memory.

For example, information processing system 1 may be a server. Components configuring information processing system 1 may be disposed to be distributed to a plurality of servers.

Many types of data are included in learning data 100. For example, when a model caused to recognize an image is trained by the machine learning, image data is included in learning data 100. First data belonging to a first type and second data belonging to a second type different from the first type are included in learning data 100. The first type and the second type are, for example, classes.

First prediction model 21 and second prediction model 22 are, for example, neural network models and perform prediction on input data. The prediction is, for example, classification here but may be object detection, segmentation, estimation of a distance from a camera to an object, or the like. Note that behavior may be a correct answer/an incorrect answer or a class when the prediction is the classification, may be a size or a positional relation of a detection frame instead of or together with the correct answer/the incorrect answer or the class when the prediction is the object detection, may be a class, a size, or a positional relation of a region when the prediction is the segmentation, and may be length of an estimated distance when the prediction is the distance estimation.

For example, a configuration of first prediction model 21 and a configuration of second prediction model 22 may be different, processing accuracy of first prediction model 21 and processing accuracy of second prediction model 22 may be different, and second prediction model 22 may be a prediction model obtained by lightening of first prediction model 21. For example, when the configuration of first prediction model 21 and the configuration of second prediction model 22 are different, second prediction model 22 has a smaller number of branches or a smaller number of nodes than first prediction model 21. For example, when the processing accuracy of first prediction model 21 and the processing accuracy of second prediction model 22 are different, second prediction model 22 has lower bit accuracy than first prediction model 21. Specifically, first prediction model 21 may be a floating point model and second prediction model 22 may be a fixed point model. Note that the configuration of first prediction model 21 and the configuration of second prediction model 22 may be different and the processing accuracy of first prediction model 21 and the processing accuracy of second prediction model 22 may be different.

Obtainer 10 obtains first data belonging to a first type and second data belonging to a second type different from the first type from learning data 100.

Prediction result calculator 20 selects the first data from data obtained by obtainer 10, inputs the first data to first prediction model 21 and second prediction model 22, and calculates a first prediction result and a second prediction result. Prediction result calculator 20 selects the second data from the data obtained by obtainer 10, inputs the second data to second prediction model 22, and calculates a third prediction result.

First error calculator 30 calculates a first error between the first prediction result and the second prediction result.

Second error calculator 40 calculates a second error between the second prediction result and the third prediction result.

Trainer 50 trains second prediction model 22 with the machine learning based on the first error and the second error. For example, trainer 50 includes parameter calculator 51 and updater 52 as functional components. Parameter calculator 51 calculates training parameters so that the first error decreases and the second error increases. Updater 52 updates second prediction model 22 using the calculated training parameters.

The operation of information processing system 1 is explained with reference to FIG. 4.

FIG. 4 is a flowchart illustrating an example of an information processing method according to the embodiment. The information processing method is a method executed by the computer (information processing system 1). Accordingly, FIG. 4 is also a flowchart illustrating an example of the operation of information processing system 1 according to the embodiment. Specifically, the following explanation is explanation of the operation of information processing system 1 and is explanation of the information processing method.

First, obtainer 10 obtains first data and second data (step S11). For example, when the first data and the second data are images, obtainer 10 obtains the first data and the second data in which objects in different classes are respectively imaged.

Subsequently, prediction result calculator 20 inputs the first data to first prediction model 21 and calculates a first prediction result (step S12), inputs the first data to second prediction model 22 and calculates a second prediction result (step S13), and inputs the second data to second prediction model 22 and calculates a third prediction result (step S14). Specifically, prediction result calculator 20 inputs the same first data to first prediction model 21 and second prediction model 22 to calculate the first prediction result and the second prediction result and inputs the first data and the second data of different types (for example, different classes) to the same second prediction model 22 to calculate the second prediction result and the third prediction result. Note that step S12, step S13, and step S14 need not be executed in this order or may be executed in parallel.

Subsequently, first error calculator 30 calculates a first error between the first prediction result and the second prediction result (step S15) and second error calculator 40 calculates a second error between the second prediction result and the third prediction result (step S16). The first error is an error between the first prediction result and the second prediction result calculated when the same first data is input to first prediction model 21 and second prediction model 22 different from each other. The second error is an error between the second prediction result and the third prediction result calculated when the first data and the second data of different types are input to the same second prediction model 22. Note that step S14 and step S15 need not be executed in this order or may be executed in parallel. Step S15 may be executed after step S12 and step S13 are executed. Thereafter, step S14 may be executed and then step S16 may be executed. Alternatively, step S16 may be executed after step S13 and step S14 are executed. Thereafter, step S12 may be executed and then step S15 may be executed.

Trainer 50 then trains second prediction model 22 with the machine learning based on the first error and the second error (step S17). Specifically, in the training of trainer 50, parameter calculator 51 calculates training parameters so that the first error decreases and the second error increases. Updater 52 updates second prediction model 22 using the training parameters. The first error decreasing means that the first prediction result and the second prediction result obtained when the same first data is input to first prediction model 21 and second prediction model 22 different from each other are prediction results close to each other. The first error is smaller as the distance between the first prediction result and the second prediction result is smaller. A distance of a prediction result can be calculated by, for example, cross-entropy. The second error increasing means that the second prediction result and the third prediction result obtained when the first data and the second data of different types are input to the same second prediction model 22 are prediction results far from each other. The second error is larger as the distance between the second prediction result and the third prediction result is smaller. Parameter calculator 51 adds up the first error and the second error after weighting the first error and the second error respectively with any coefficients to calculate training parameters. For example, for the training of second prediction model 22, a weighted sum of the first error and the second error may be used or a new constant α may be defined and Triplet Loss may be used.

Here, a feature value space in first prediction model 21 and a feature value space in second prediction model 22 in the embodiment are explained with reference to FIG. 5.

FIG. 5 is a diagram illustrating an example of a feature value space immediately before an identification layer in first prediction model 21 and a feature value space immediately before an identification layer in second prediction model 22 in the embodiment. Six circles in each of the feature value spaces indicate feature values of data input to each of the prediction models. Three white circles are respectively feature values of data of the same type (for example, class X). Three dotted circles are respectively feature values of data of the same type (for example, class Y). Class X and class Y are different classes. For example, about each of the prediction models, a prediction result of data, feature values of which are present further on the left side than an identification surface in the feature value space, indicates class X and a prediction result of data, feature values of which are present further on the right side than the identification surface, indicates class Y.

First prediction model 21 is a model having high expressive power (in other words, large number of parameters). Accordingly, in the feature value space in first prediction model 21, an inter-class distance is large about the data of class X and the data of class Y. Three data of class X and three data of class Y can be respectively identified.

On the other hand, second prediction model 22 is a model having low expressive power (in other words, small number of parameters). The comparative example is an example in which second prediction model 22 is trained considering only the first error. The inter-class distance in second prediction model 22 does not increase in the training. However, in the embodiment, the training of second prediction model 22 is performed considering not only the first error but also the second error. Specifically, by considering not only the first error between first prediction model 21 and second prediction model 22 different from each other but also the second error in the same second prediction model 22, as in first prediction model 21, the inter-class distance can be increased in second prediction model 22 as well. Therefore, in the training considering the first error and the second error, identification performance of first prediction model 21 and identification performance of second prediction model 22 can be set the same and the behavior of first prediction model 21 and the behavior of second prediction model 22 can be brought close to each other. Specifically in the example illustrated in FIG. 5, in second prediction model 22, as in first prediction model 21, among six data, three data can be identified as class X and three data can be identified as class Y. Further, all of the data identified as class X in first prediction model 21 can be identified as class X in second prediction model 22 as well. All of the data identified as class Y in first prediction model 21 can be identified as class Y in second prediction model 22 as well.

In this way, in the training of second prediction model 22 based on the first error and the second error in the embodiment, the inter-class distance can be increased and the behavior of second prediction model 22 can be brought close to the behavior of first prediction model 21.

As explained above, second prediction model 22 is trained by the machine learning using not only the first error between the first prediction result and the second prediction result calculated by inputting the same first data to first prediction model 21 and second prediction model 22 but also the second error between the second prediction result and the third prediction result calculated by inputting the first data and the second data of the different types to second prediction model 22. Accordingly, it is possible to bring the behavior of first prediction model 21 and the behavior of second prediction model 22 close to each other. At the same time, it is possible to maintain or reduce a difference between the recognition performance of first prediction model 21 and the recognition performance of second prediction model 22 and prevent the difference from increasing.

It is possible to improve a coincidence ratio of the behavior of first prediction model 21 and the behavior of second prediction model 22, for example, by updating second prediction model 22 using training parameters calculated so that the first error between the first prediction result and the second prediction result calculated by inputting the same first data to first prediction model 21 and second prediction model 22 different from each other decreases and the second error between the second prediction result and the third prediction result calculated by inputting the first data and the second data of the different types to the same second prediction model 22 increases.

### (Other embodiments)

The information processing method and information processing system 1 according to one or more aspects of the present disclosure are explained above based on the foregoing embodiments. However, the present disclosure is not limited to these embodiments. Various modifications applied to the embodiments that can be conceived by those skilled in the art as well as forms constructed by combining constituent elements in different embodiments, without departing from the essence of the present disclosure, may be included in the one or more aspects of the present disclosure.

For example, in the embodiment explained above, an example is explained in which second prediction model 22 is obtained by the lightening of first prediction model 21. However, second prediction model 22 needs not be a model obtained by the lightening of first prediction model 21.

For example, in the embodiment explained above, an example is explained in which the first data and the second data are the images. However, the first data and the second data may be other data. Specifically, the first data and the second data may be sensing data other than the images. For example, sensing data from which correct answer data is obtainable such as voice data output from a microphone, point group data output from a radar such as a LiDAR, pressure data output from a pressure sensor, temperature data and humidity data output from a temperature sensor and a humidity sensor, and smell data output from a smell sensor may be set as processing targets.

For example, second prediction model 22 after the training according to the embodiment explained above may be incorporated in a device. This is explained with reference to FIG. 6.

FIG. 6 is a block diagram illustrating an example of information processing device 300 according to another embodiment. Note that, in FIG. 6, sensor 400 is also illustrated other than information processing device 300.

As illustrated in FIG. 6, information processing device 300 includes obtainer 310 that obtains sensing data, controller 320 that inputs the sensing data to second prediction model 22 trained by the machine learning based on the first error and the second error and obtains a prediction result, and outputter 330 that outputs data based on the obtained prediction result. In this way, information processing device 300 including obtainer 310 that obtains sensing data from sensor 400, controller 320 that controls processing using second prediction model 22 after training, and outputter 330 that outputs the data based on the prediction result, which is an output of second prediction model 22, may be provided. Note that sensor 400 may be included in information processing device 300. Obtainer 310 may obtain sensing data from a memory in which the sensing data is recorded.

For example, the present disclosure can be implemented as a program for causing a processor to execute the steps included in the information processing method. In addition, the present disclosure can be implemented as a non-transitory, computer-readable recording medium, such as a CD-ROM, on which the program is recorded.

For example, when the present disclosure is implemented as a program (software), the respective steps can be executed by way of the program being executed using hardware resources such as a CPU, memory, and input/output circuit of a computer, etc. Specifically, the respective steps are executed by the CPU obtaining data from the memory or input/output circuit, etc., and performing arithmetic operations using the data, and outputting a result of the arithmetic operation to the memory or the input/output circuit, etc.

It should be noted that, in the foregoing embodiment, each of the structural components included in information processing system 1 is configured using dedicated hardware, but may be implemented by executing a software program suitable for the structural component. Each of the structural components may be implemented by means of a program executer, such as a CPU or a processor, reading and executing the software program recorded on a recording medium such as a hard disk or a semiconductor memory.

Some or all of the functions included in information processing system 1 according to the foregoing embodiment are implemented typically as a large-scale integration (LSI) which is an integrated circuit. They may take the form of individual chips, or one or more or all of them may be encapsulated into a single chip. Furthermore, the integrated circuit is not limited to an LSI, and thus may be implemented as a dedicated circuit or a general-purpose processor. Alternatively, a field programmable gate array (FPGA) that allows for programming after the manufacture of an LSI, or a reconfigurable processor that allows for reconfiguration of the connection and the setting of circuit cells inside an LSI may be employed.

In addition, the present disclosure also includes the various variations that can be obtained by modifications to respective embodiments of the present disclosure that can be conceived by those skilled in the art without departing from the essence of the present disclosure.

### [Industrial Applicability]

The present disclosure can be applied to the development of a prediction model to be used during execution of deep learning on an edge device, for example.

### [Reference Signs List]

1, 1a information processing system
10, 10a, 310 obtainer
20, 20a prediction result calculator
21 first prediction model
22 second prediction model
30 first error calculator
40 second error calculator
50, 50a trainer
51, 51a parameter calculator
52, 52a updater
100 learning data
300 information processing device
320 controller
330 outputter

## Claims

1. An information processing method to be executed by a computer, the information processing method comprising:
obtaining first data belonging to a first type and second data belonging to a second type different from the first type;
calculating a first prediction result by inputting the first data into a first prediction model;
calculating a second prediction result by inputting the first data into the second prediction model;
calculating a third prediction result by inputting the second data into the second prediction model;
calculating a first error between the first prediction result and the second prediction result;
calculating a second error between the second prediction result and the third prediction result; and
training the second prediction model by machine learning, based on the first error and the second error.

2. The information processing method according to claim 1, wherein
the first type and the second type are classes.

3. The information processing method according to claim 1 or claim 2, wherein
the first prediction model has a configuration different from a configuration of the second prediction model.

4. The information processing method according to any one of claims 1 to 3, wherein
the first prediction model has a processing accuracy different from a processing accuracy of the second prediction model.

5. The information processing method according to claim 3 or claim 4, wherein
the second prediction model is obtained by making the first prediction model lighter.

6. The information processing method according to any one of claims 1 to 5, wherein
the training includes:
calculating a training parameter by which the first error decreases and the second error increases; and
updating the second prediction model using the training parameter calculated.

7. The information processing method according to any one of claims 1 to 6, wherein
the first prediction model and the second prediction model are neural network models.

8. An information processing system comprising:
an obtainer that obtains first data belonging to a first type and second data belonging to a second type different from the first type;
a prediction result calculator that calculates a first prediction result by inputting the first data into a first prediction model, calculates a second prediction result by inputting the first data into the second prediction model, and calculates a third prediction result by inputting the second data into the second prediction model;
a first error calculator that calculates a first error between the first prediction result and the second prediction result;
a second error calculator that calculates a second error between the second prediction result and the third prediction result; and
a trainer that trains the second prediction model by machine learning, based on the first error and the second error.

9. An information processing device comprising:
an obtainer that obtains sensing data;
a controller that obtains a prediction result by inputting the sensing data into a second prediction model; and
an outputter that outputs data based on the prediction result obtained, wherein
the second prediction model is trained by machine learning based on a first error and a second error,
the first error is an error between a first prediction result and a second prediction result,
the second error is an error between the second prediction result and a third prediction result,
the first prediction result is calculated by inputting first data into a first prediction model,
the second prediction result is calculated by inputting the first data into the second prediction model,
the third prediction result is calculated by inputting second data into the second prediction model,
the first data is data belonging to a first type, and
the second data is data belonging to a second type different from the first type.
